# EUROPEAN PATENT SPECIFICATION

(11) **EP 1 530 854 B1**
(45) Date of publication and mention of the grant of the patent: **06.09.2017**
(21) Application number: 03792975.9
(22) Date of filing: 19.07.2003
(51) Int. Cl.: H04L 12/70, H04L 12/701, H04L 12/773, H04L 12/775, H04L 12/935, H04L 12/933, H04L 29/06

(54) **PACKET PROCESSING ENGINE**
PAKETVERARBEITUNGSGERÄT
MOTEUR DE TRAITEMENT DES PAQUETS

(30) Priority: 24.08.2002 US 227114; 24.08.2002 US 227119
(43) Date of publication of application: 18.05.2005
(73) Proprietor: Cisco Technology, Inc., San Jose, CA 95134 (US)
(72) Inventor: SUKONIK, Vitaly, 37010 Katsir (IL); LAOR, Michael, 30900 Zichron-Yakov (IL); GALLES, Michael, B., Los Altos, CA 94024 (US); VOLOSHIN, Moshe, Sunnyvale, CA 94087 (US); EATHERTON, William, N., San Jose, CA 95120 (US); ZEMACH, Rami, 46447 Herzeliya (IL); BETTINK, John, H., W., San Jose, CA 95120 (US); ZEMACH, Rami, Givat Shapira 42912 (IL)
(74) Representative: Kazi, Ilya
(86) International application number: PCT/US2003/022573
(87) International publication number: WO 2004/019571

(56) References cited:
- EP-A- 1 085 723
- WO-A-02/09307
- WO-A-02/39667
- US-A- 5 949 780
- US-A- 6 032 190

## Description

### FIELD OF THE INVENTION

This invention especially relates to communications and computer systems; and more particularly, the invention relates to processing of packets such as in a router, packet switching system, or other communications or computer system; more specifically, such processing may include distributing packets or subsets thereof to individual packet processors and gathering the processed packet or subsets and forwarding the resultant modified or otherwise processed packets, and accessing one or more resources shared among processing engines.

### BACKGROUND OF THE INVENTION

The communications industry is rapidly changing to adjust to emerging technologies and ever increasing customer demand. This customer demand for new applications and increased performance of existing applications is driving communications network and system providers to employ networks and systems having greater speed and capacity (e.g., greater bandwidth). In trying to achieve these goals, a common approach taken by many communications providers is to use packet switching technology. Increasingly, public and private communications networks are being built and expanded using various packet technologies, such as Internet Protocol (IP).

A network device, such as a switch or router, typically receives, processes, and forwards or discards a packet based on one or more criteria, including the type of protocol used by the packet, addresses of the packet (e.g., source, destination, group), and type or quality of service requested. Additionally, one or more security operations are typically performed on each packet.

Known packet processes typically have architectures consisting of a pipeline with fixed stages of hardware resource blocks and micro-sequencers. The hardware resource blocks include functionality like parsing of packet headers based on register based configuration for packet classification and longest prefix match search. The micro-sequencers can do header modification based on results from resource blocks. This architecture strikes a balance between high performance (similar to levels of completely hardwired packet processors) and flexibility. There have been numerous tweaks made to the micro-code to support features not understood when the original ASICs were designed that would have required a re-spin if the micro-sequencers had not been included.

The primary difficulty with this architecture is that the pipeline architecture still assumes that the ordering of processing and resource accesses is mostly understood at the time of the application-specific integrated circuit (ASIC) design, and is fairly consistent across all applications. If new applications want to use resources (e. g. , memories, lookup engines, or content-addressable memories) in new ways or want to more flexibly trade-off performance and features, the pipeline architecture is rigid. Additionally, the complexity of programming the pipelined engines greatly escalates with an increased number of processor stages. Also, the split packet processing functionality across the various stages of the pipelined architecture greatly constrains the packet processing capabilities. Needed are new methods and apparatus for processing packets.

EP 1085723 discloses a packet processing device having a digest information generation unit configured to extract a plurality of prescribed bit sequences from an input packet, and generate digest information based on the bit sequences indicating processing to be applied to the input packet, and a packet processing unit configured to process the input packet using an instruction sequence that is obtained according to the digest information.

Various packet routing approaches are disclosed in WO 02/09307 and US 6032190. An approach for integrating intelligence into a communications service at a switching node is disclosed in US 5949780.

WO 02/39667 discloses a switch-based network processor including a packet parser, search and modification scheduler that parses a data packet, develops a search for a processing rule associated with the packet, and schedules a modification to be performed on the packet based on the rule. The processor also includes several search resources that each can search simultaneously for a processing rule.

### SUMMARY OF THE INVENTION

Aspects of the invention are set out in the independent claims. Certain preferred features are set out in the dependent claims.

Methods and apparatus are disclosed for processing packets in a router, packet switching system, or other communications or computer system. Such packet processing may include, for example, but is not limited to (nor all embodiments require) using a high performance massively parallel packet processing architecture, distributing packets or subsets thereof to individual packet processors and gathering the processed packet or subsets and forwarding the resultant modified or otherwise processed packets, accessing packet processing resources across a shared resource network, accessing packet processing resources using direct memory access techniques, and/or storing one overlapping portion of a packet in a global packet memory while providing a second overlapping portion to a packet processor.

In one embodiment, a packet belonging to one of multiple streams of packets is received. A next packet processor is determined based on a distribution pattern. A subset of bytes of the packet is distributed to the next packet processor. The subset of the packet is processed to generate a modified subset, which is gathered from the next packet processor in turn based on the distribution pattern; and a modified packet including the modified subset is forwarded. In one embodiment, a portion of the packet is placed in a global packet memory. In one embodiment, this portion and the processed subset of the packet include overlapping bytes of the packet. In one embodiment, the processing of the packet includes accessing one or more processing resources across a resource network shared by multiple packet processing engines. In one embodiment, the global packet memory is one of these resources. In one embodiment, these resources are accessed using direct memory access (DMA) techniques. In one embodiment, a packet processor can simultaneously have multiple DMA requests outstanding to the same or to different resources. In one embodiment, packet processing is performed using other methods and apparatus disclosed herein.

### BRIEF DESCRIPTION OF THE DRAWINGS

The appended claims set forth the features of the invention with particularity. The invention, together with its advantages, may be best understood from the following detailed description taken in conjunction with the accompanying drawings of which:
FIG. 1A is a block diagram of an exemplary system employing one embodiment of a packet processor as disclosed herein;
FIG. 1B is a block diagram of a component, such as, but not limited to a packet processor, distributor, gatherer, or resource used in one embodiment;
FIG. 2 is a block diagram of a packet processor used in one embodiment;
FIGs. 3A-C are block diagrams of a packet processor including a cluster and packet processing engine hierarchical architecture used in one embodiment;
FIG. 4A illustrates a process for distributing subsets of packets to packet processing engines used in one embodiment;
FIG. 4B illustrates a block diagram of first and second subsets of a packet used in one embodiment;
FIG. 5 illustrates a process for gathering packets from modified subsets of packets from packet processing engines used in one embodiment;
FIG. 6A illustrates a process for modifying subsets of packets used in one embodiment;
FIG. 6B illustrates block diagrams of an exemplary direct memory access (DMA) descriptor and an exemplary set of state indicators used in one embodiment; and
FIGs. 7A-B illustrate processes used by a resource in one embodiment.

### DETAILED DESCRIPTION

Methods and apparatus are disclosed for processing packet, such as in a router, packet switching system, or other communications or computer component, device, or system. Embodiments described herein include various elements and limitations, with no one element or limitation contemplated as being a critical element or limitation. Each of the claims individually recites an aspect of the invention in its entirety. Moreover, some embodiments described may include, but are not limited to, *inter alia,* systems, networks, integrated circuit chips, embedded processors, ASICs, methods, and computer-readable medium containing instructions. The embodiments described hereinafter embody various aspects and configurations within the scope and spirit of the invention, with the figures illustrating exemplary and non-limiting configurations.

As used herein, the term "packet" refers to packets of all types or any other units of information or data, including, but not limited to, fixed length cells and variable length packets, each of which may or may not be divisible into smaller packets or cells. The term "packet" as used herein also refers to both the packet itself or a packet indication, such as, but not limited to all or part of a packet or packet header, a data structure value, pointer or index, or any other part or identification of a packet. Moreover, these packets may contain one or more types of information, including, but not limited to, voice, data, video, and audio information. The term "item" is used herein to refer to a packet or any other unit or piece of information or data. The phrases "processing a packet" and "packet processing" typically refer to performing some steps or actions based on the packet, and which may or may not include modifying and/or forwarding the packet.

The term "system" is used generically herein to describe any number of components, elements, sub-systems, devices, packet switch elements, packet switches, routers, networks, computer and/or communication devices or mechanisms, or combinations of components thereof. The term "computer" is used generically herein to describe any number of computers, including, but not limited to personal computers, embedded processing elements and systems, control logic, ASICs, chips, workstations, mainframes, etc. The term "processing element" is used generically herein to describe any type of processing mechanism or device, such as a processor, ASIC, field programmable gate array, computer, etc. The term "device" is used generically herein to describe any type of mechanism, including a computer or system or component thereof. The terms "task" and "process" are used generically herein to describe any type of running program, including, but not limited to a computer process, task, thread, executing application, operating system, user process, device driver, native code, machine or other language, etc., and can be interactive and/or non-interactive, executing locally and/or remotely, executing in foreground and/or background, executing in the user and/or operating system address spaces, a routine of a library and/or standalone application, and is not limited to any particular memory partitioning technique. The steps, connections, and processing of signals and information illustrated in the figures, including, but not limited to any block and flow diagrams and message sequence charts, may be performed in the same or in a different serial or parallel ordering and/or by different components and/or processes, threads, etc., and/or over different connections and be combined with other functions in other embodiments in keeping within the scope and spirit of the invention.

Moreover, the terms "network" and "communications mechanism" are used generically herein to describe one or more networks, communications mediums or communications systems, including, but not limited to the Internet, private or public telephone, cellular, wireless, satellite, cable, local area, metropolitan area and/or wide area networks, a cable, electrical connection, bus, etc., and internal communications mechanisms such as message passing, interprocess communications, shared memory, etc.

The term "storage mechanism" includes any type of memory, storage device or other mechanism for maintaining instructions or data in any format. "Computer-readable medium" is an extensible term including any memory, storage device, storage mechanism, and other storage and signaling mechanisms including interfaces and devices such as network interface cards and buffers therein, as well as any communications devices and signals received and transmitted, and other current and evolving technologies that a computerized system can interpret, receive, and/or transmit. The term "memory" includes any random access memory (RAM), read only memory (ROM), flash memory, integrated circuits, and/or other memory components or elements. The term "storage device" includes any solid state storage media, disk drives, diskettes, networked services, tape drives, and other storage devices. Memories and storage devices may store computer-executable instructions to be executed by a processing element and/or control logic, and data which is manipulated by a processing element and/or control logic. The term "data structure" is an extensible term referring to any data element, variable, data structure, data base, and/or one or more or an organizational schemes that can be applied to data to facilitate interpreting the data or performing operations on it, such as, but not limited to memory locations or devices, sets, queues, trees, heaps, lists, linked lists, arrays, tables, pointers, etc. A data structure is typically maintained in a storage mechanism. The terms "pointer" and "link" are used generically herein to identify some mechanism for referencing or identifying another element, component, or other entity, and these may include, but are not limited to a reference to a memory or other storage mechanism or location therein, an index in a data structure, a value, etc. The term "associative memory" refers to all types of known or future developed associative memories, including, but not limited to binary and ternary content-addressable memories, hash tables, TRIE and other data structures, etc.

The term "one embodiment" is used herein to reference a particular embodiment, wherein each reference to "one embodiment" may refer to a different embodiment, and the use of the term repeatedly herein in describing associated features, elements and/or limitations does not establish a cumulative set of associated features, elements and/or limitations that each and every embodiment must include, although an embodiment typically may include all these features, elements and/or limitations. In addition, the phrase "means for xxx" typically includes computer-readable medium containing computer-executable instructions for performing xxx.

In addition, the terms "first," "second," etc. are typically used herein to denote different units (e.g., a first element, a second element). The use of these terms herein does not necessarily connote an ordering such as one unit or event occurring or coming before the another, but rather provides a mechanism to distinguish between particular units. Additionally, the use of a singular tense of a noun is non-limiting, with its use typically including one or more of the particular item rather than just one (e.g., the use of the word "memory" typically refers to one or more memories without having to specify "memory or memories," or "one or more memories" or "at least one memory", etc.) Moreover, the phrases "based on x" and "in response to x" are used to indicate a minimum set of items x from which something is derived or caused, wherein "x" is extensible and does not necessarily describe a complete list of items on which the operation is performed, etc. Additionally, the phrase "coupled to" is used to indicate some level of direct or indirect connection between two elements or devices, with the coupling device or devices modify or not modifying the coupled signal or communicated information. The term "subset" is used to indicate a group of all or less than all of the elements of a set. Moreover, the term "or" is used herein to identify a selection of one or more, including all, of the conjunctive items.

Methods and apparatus are disclosed for processing packets in a router, packet switching system, or other communications or computer system. Such packet processing may include, for example, but is not limited to using a high performance massively parallel packet processing architecture, distributing packets or subsets thereof to individual packet processors and gathering the processed packet or subsets and forwarding the resultant modified or otherwise processed packets, accessing packet processing resources across a shared resource network, accessing packet processing resources using direct memory access techniques, and/or storing one overlapping portion of a packet in a global packet memory while providing a second overlapping portion to a packet processor.

In one embodiment, a packet belonging to one of multiple streams of packets is received. A next packet processor is determined based on a distribution pattern. A subset of bytes of the packet is distributed to the next packet processor. The subset of the packet is processed to generate a modified subset, which is gathered from the next packet processor in turn based on the distribution pattern; and a modified packet including the modified subset is forwarded. In one embodiment, the state of the processing is checked prior to gathering from a packet processing element. In one embodiment, the processing of a subset continues after it is gathered, such as in the case of a multicast packet, packet fragmentation, wiretapping or snooping (e.g., routing a copy to another location). In one embodiment, a packet processing element is skipped during a current gathering round. In one embodiment, whether to skip is determined based on an indication provided by the packet processing element. In one embodiment, the same number of skip operations are performed in the gathering of all packets belonging to a particular stream of packets. In one embodiment, a packet to be forwarded is derived from a gathered modified subset of a packet and a subset of the packet stored in a global packet memory. In one embodiment, the subset of the packet manipulated by a packet processing engine and the subset stored in a global packet memory contain overlapping portions of the original packet.

In one embodiment, the processing of the packet includes accessing one or more processing resources across a resource network shared by multiple packet processing engines. In one embodiment, the global packet memory is one of these resources. In one embodiment, these resources are accessed using direct memory access (DMA) techniques. In one embodiment, a packet processor can simultaneously have multiple DMA requests outstanding to the same or to different resources. In one embodiment, a descriptor used in a prior DMA request is modified and then used in a second DMA request.

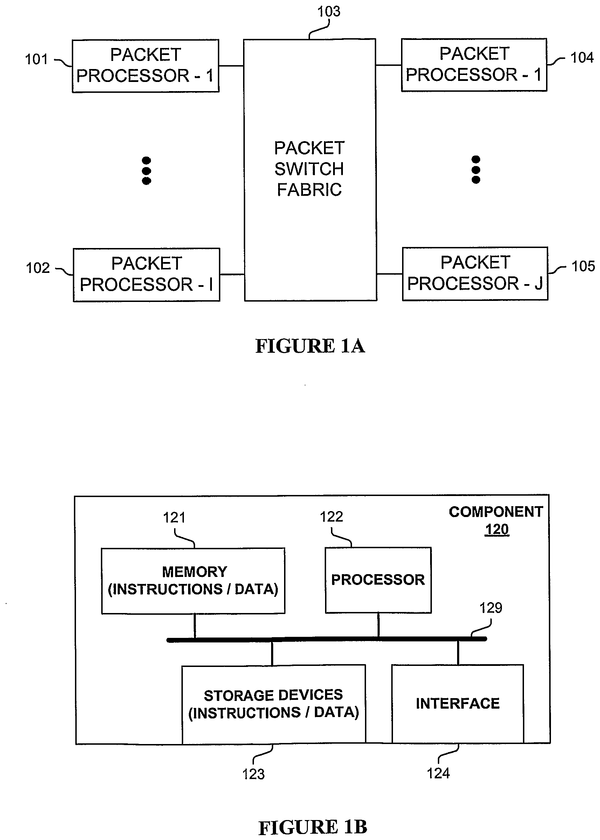

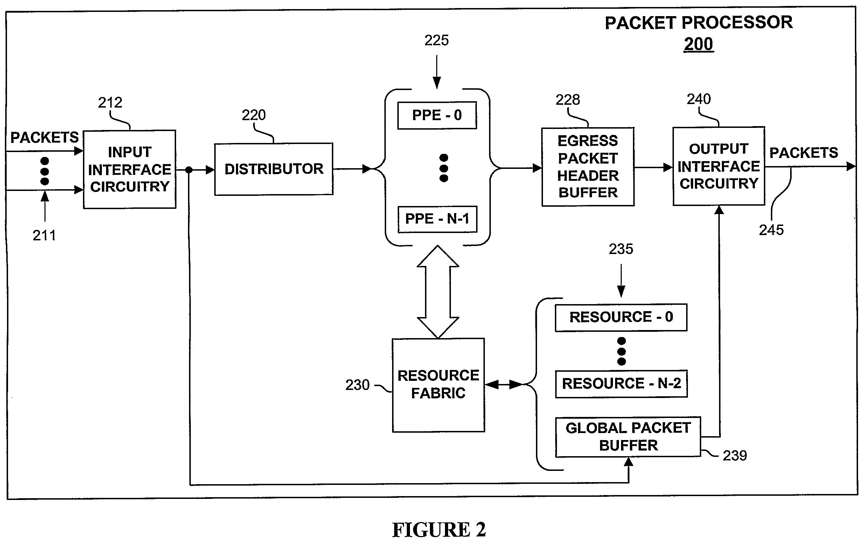

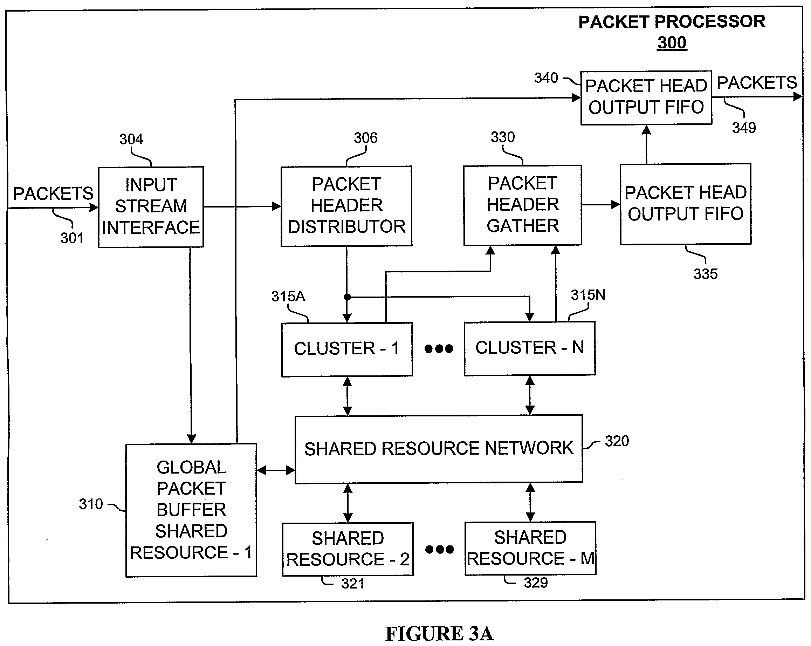

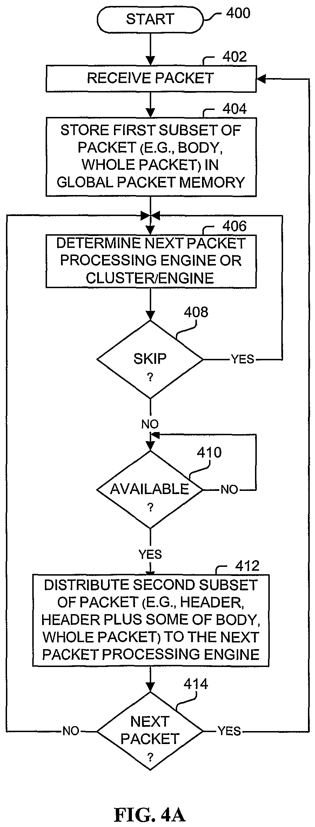

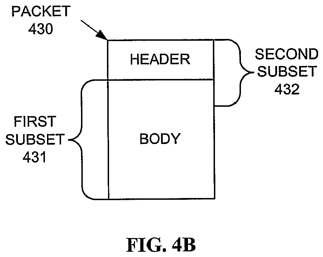

FIG. 1A illustrates using one embodiment of ingress packet processors 101 and 102 connected to a switching fabric 103, which is connected to one embodiment of egress packet processors 104 and 105. In one embodiment, packet processors 101, 102, 104, and/or 105 correspond to one of the packet processors illustrated in FIGs. 2 and/or 3A and/or operates according to one of the flow diagrams illustrated in FIGs. 4, 5 and/or 6A.

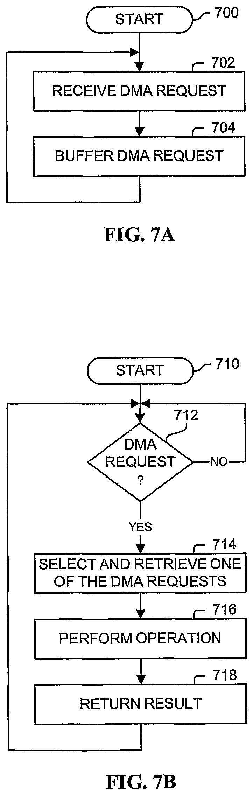

FIG. 1B illustrates a component 120. In one embodiment, component 120 corresponds to a packet processor operating according to one of the flow diagrams illustrated in FIGs. 4, 5 and/or 6A. In one embodiment, component 120 corresponds to a resource operating according to the flow diagrams illustrated in FIGs. 7A-B.

In one embodiment, component 120 includes a processor 121, memory 122, storage devices 123, and an external interface 124 for receiving and sending packets and other information, which are typically coupled via one or more communications mechanisms 129 (shown as a bus for illustrative purposes.) Various embodiments of component 120 may include more or less elements. The operation of component 120 is typically controlled by processor 121 using memory 122 and storage devices 123 to perform one or more scheduling tasks or processes. Memory 122 is one type of computer-readable medium, and typically comprises random access memory (RAM), read only memory (ROM), flash memory, integrated circuits, and/or other memory components. Memory 122 typically stores computer-executable instructions to be executed by processor 121 and/or data which is manipulated by processor 121 for implementing functionality in accordance with the invention. Storage devices 123 are another type of computer-readable medium, and typically comprise solid state storage media, disk drives, diskettes, networked services, tape drives, and other storage devices. Storage devices 123 typically store computer-executable instructions to be executed by processor 121 and/or data which is manipulated by processor 121 for implementing functionality in accordance with the invention.

FIG. 2 illustrates one embodiment of a packet processor 200. Packets 211 are received by input interface circuitry 212. A first subset of bytes of a received packet is placed in global packet buffer 239. Typically, this first subset of bytes is not required for processing of the packet. However, as global packet buffer 239 is configured as a shared resource, any portion of the first subset can subsequently be retrieved by a packet processing engine.

A second subset of bytes of a received packet is forwarded to a distributor 220. The second subset includes the information contained in the received packet that is typically required for processing of the packet. In one embodiment, the first and second subset of bytes include overlapping portions of the received packet, which may be advantageous as a packet processing engine can overwrite a determined non-needed portion of the second subset of bytes, or deallocate a corresponding portion of memory. In one embodiment, this overlapping portion of bytes includes bytes which are not modified during packet processing, but their contents may be required for such processing. Thus, the packet processing engine may not need to forward any of the overlapping portion as during a gather phase these bytes will be included from the first subset when the modified packet is assembled during a gather and forwarding process.

Distributor 220 distributes a first subset of the packet to a next available packet processing engine 225 based on a deterministic or random distribution pattern. In one embodiment, a round-robin distribution pattern is used. In one embodiment using a random distribution pattern, a distribution order is tracked for use by a gathering element so that packet order is maintained, at least for packets belonging to a same stream. In one embodiment, a packet processing engine 225 may indicate a skip operation to distributor 220, so that the particular packet processing engine 225 is passed over during a current distribution round. In one embodiment, all packets belonging to a same packet stream cause each packet processing engine delivered one of these packets to generate the same number of skip operations to maintain the original order of the packets. In one embodiment, the original order is not maintained by the packet processor. In one embodiment, distributor 220 will wait, if necessary, for an identified next packet processing engine 225 to become ready before distributing it a packet or before moving on to a next packet processing engine 225.

As shown, packet processing engines 225 are connected via resource fabric 230 to a plurality of resources 235. In one embodiment, global packet buffer 239 is one of these resources 235. In one embodiment, resources 235 may include, *inter alia,* a resource routing unit, a policer, an associative memory, a traffic engineer, a statistics collector, and/or an authorization unit, etc. For example, a next hop address may be determined and returned to the requesting packet processing engine 225. In one embodiment, resources 235 are accessed by a packet processing engine using direct memory access (DMA) techniques.

After processing is completed, a modified second subset of a received packet is retrieved/received by egress packet header buffer 228, typically in a gathering pattern based on the distribution pattern, and is forwarded to output interface circuitry 240. The remaining portion of the original packet is retrieved/received from global packet buffer 239. Output interface circuitry 240 assembles and forwards the modified packet 245 to a next component or system. In one embodiment, a packet processing engine 225 may or may not become available to process a next packet, as it may continue to process its current data to generate an additional one or more packets, such as required by a multicast or snoop operation, or to perform some additional processing such a required by certain statistics operations.

FIGs. 3A-3C illustrate a hierarchical packet processing architecture used in one embodiment. Turning to FIG. 3A, packets 301 are received into packet processor 300 by input stream interface 304, which distributes a first subset of the received packets to global packet buffer shared resource 310 and a second overlapping or non-overlapping subset of the received packet to packet header distributor 306, which distributes the second subset to one of the clusters 315A-N, possibly specifying a particular packet processing engine or leaving that distribution to the particular cluster. Elements within clusters 315A-N perform the packet processing, typically using one or more shared resources 310 and 321-329, which are accessed via shared resource network 320.

Modified second subsets of bytes of received packets are gathered from clusters 315A-315N by packet header gather 330, and are forwarded to packet head output FIFO 335. Modified packets 349 are sent from packet head output FIFO 340 after being assembled based on the first subset of bytes received from global packet buffer shared resource 310 and on the modified subset of bytes received from packet head output FIFO 335.

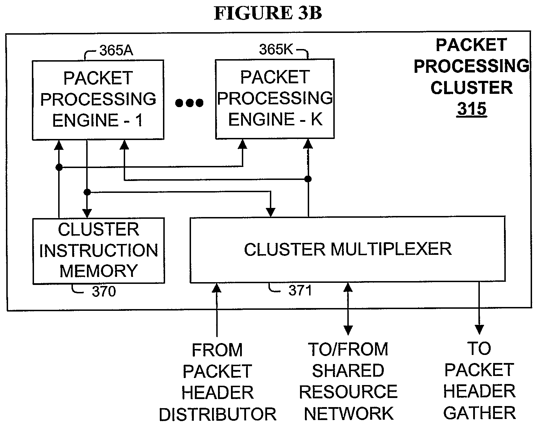

FIG. 3B illustrates a packet processing cluster 315 used in one embodiment. Cluster 315 typically includes multiple packet processing engines 365A-365K which share a common cluster instruction memory 370 and are connected to components and resources outside cluster 315 via cluster multiplexer 371.

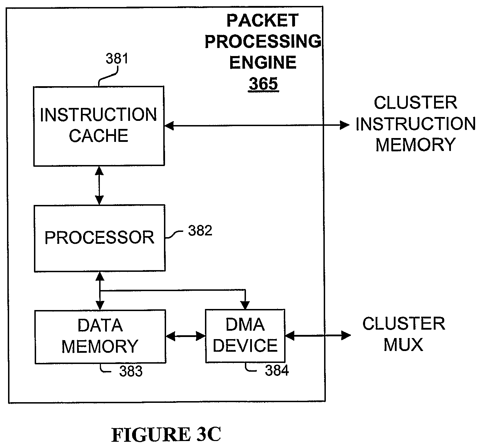

FIG. 3C illustrates one embodiment of a packet processing engine 365. Processor 382, based on instructions provided by instruction cache 381, performs operations on the second subset of bytes of a received packet and/or other data or information stored in data memory 383. Data memory is one type of computer-readable medium. In one embodiment, packet processing engine 365 communicates with other components and/or resources via direct memory access (DMA) device 384, although any communication mechanism could be used.

FIG. 4A illustrates a process for distributing packets, or subsets thereof, used in one embodiment. Processing beings with process block 400, and proceeds to process block 402, wherein a packet is received. In process block 404, a first subset of the packet is stored in a global packet memory. Note, in keeping with the definition, this first subset could included the whole packet, the body of the packet, or any other portion or portions thereof. Next, in process block 406, a next packet processing engine (or cluster or both depending on the embodiment) is determined. As determined in process block 408, if the determined packet processing engine is to be skipped, then processing returns to process block 406 to identify a new next packet processing engine. Otherwise, when the processing engine is or becomes available as indicated by process block 410, then in process block 412, a second subset of the packet is distributed to the determined next packet processing engine. Note, in keeping with the definition, this second subset could included the whole packet, the header of the packet, or any other portion or portions thereof. Next, as determined in process block 414, if further distribution of the same packet is to be performed (e.g., to distribute the second subset of the packet to another packet processor, such as for processing in parallel multiple operations based on the packet), then processing returns to process block 406. Others, processing then to process block 402 to receive and distribute the next packet.

FIG. 4B illustrates a block diagram of a packet 430, and a first subset 431 and a second subset 432 derived there from as used in one embodiment. In one embodiment, first subset 431 and/or second subset 432 includes all of packet 430. In one embodiment, first subset 431 and second subset 432 include overlapping portions of packet 430. In one embodiment, first subset 431 and second subset 432 do not include overlapping portions of packet 430. In one embodiment, first subset 431 includes any contiguous or noncontiguous portion of packet 430. In one embodiment, second subset 432 includes any contiguous or noncontiguous portion of packet 430.

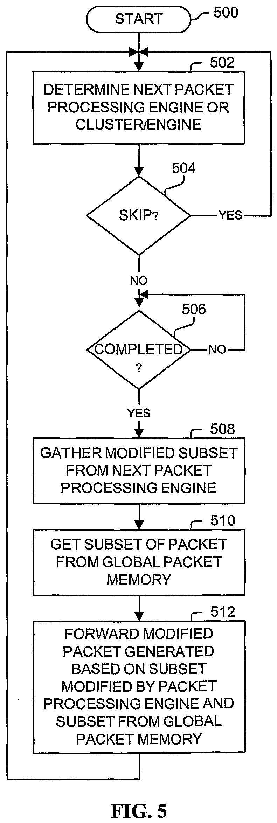

FIG. 5 illustrates a process for gathering processed packets or subsets thereof used in one embodiment. Processing begins with process block 500, and proceeds to process block 502, wherein a next packet processing engine is determined. As determined in process block 504, if a skip operation is indicated for the determined next packet processing engine, then processing returns to process block 502 to determine a new next packet processing engine. Otherwise, after the packet processing element has completed its processing as indicated by process block 506, then the modified (or unmodified) subset is gathered from the determined next packet processing engine. In process block 510, the first subset of the packet is retrieved/received from the global packet memory, and in process block 512, the modified packet is assembled and forwarded. Processing then returns to process block 502.

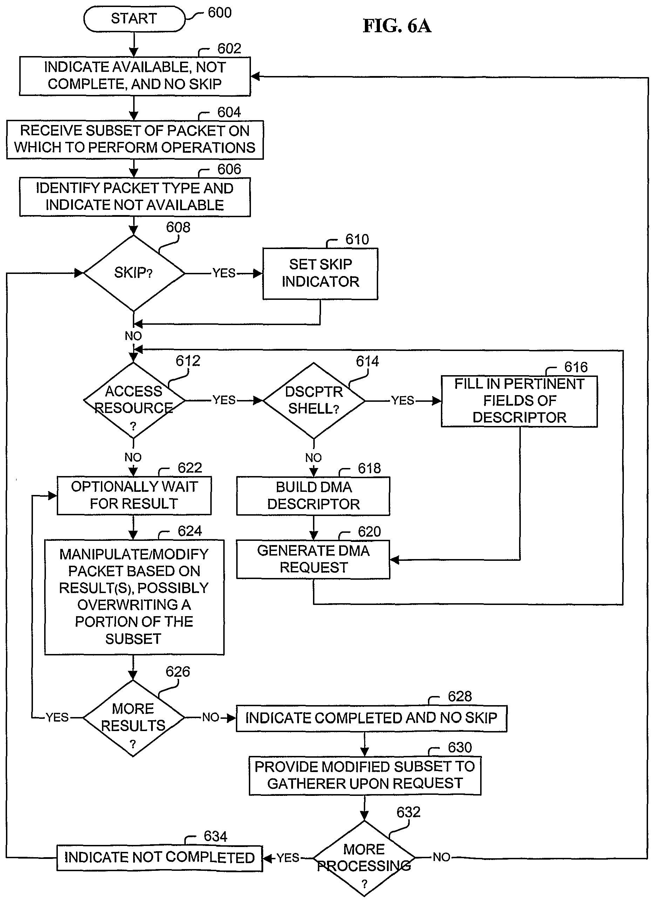

FIG. 6A illustrates a process for processing packets or subsets thereof used in one embodiment. Processing begins with process block 600, and proceeds to process block 602, wherein indicators are initialized that the packet processing engine is available to receive data, processing is not complete, and no skip operation. In process block 604, the subset of a packet is received. In process block 606, an indication that the packet processor is not available is set, and the type of packet is identified (e.g., what protocol or other processing is to be performed.) As determined in process block 608, if the type of packet corresponds to one requiring a skip operation, then in process block 610, a skip indicator is set.

Next, as determined in process block 612, if a resource needs to be accessed, then as determined in process block 614, if a direct memory access (DMA) descriptor shell already exists, then in process block 616, the pertinent (e.g., remaining, different, etc.) fields of the descriptor are filled; otherwise, in process block 618, the DMA descriptor is build in memory. In process block 620, a DMA request is generated. Processing returns to process block 612 to possibly send out more DMA requests. Note, multiple DMA requests can be outstanding at a same time.

Otherwise, processing proceeds to process block 622 to optionally wait for some results from a DMA request or to receive some other data needed for processing. Then, in process block 624, the packet is manipulated and/or modified as required for the processing to be performed on the packet or subset thereof. In one embodiment, a portion of the subset of the packet being manipulated and/or modified may be overwritten during this process. Next, as determined in process block 626, if there are more results expected, then processing returns to process block 622. Otherwise, in process block 628, the packet processing engine indicates that processing is complete and no skip operation is set. In process block 630, the modified packet or subset thereof is provided to the gatherer upon request or at the appropriate time. As determined in process block 632, if all processing is completed and a new packet or subset thereof is ready to be received, then processing returns to process block 602. Otherwise, in process block 634, the packet processing engine indicates that processing is not complete, and processing returns to process block 608.

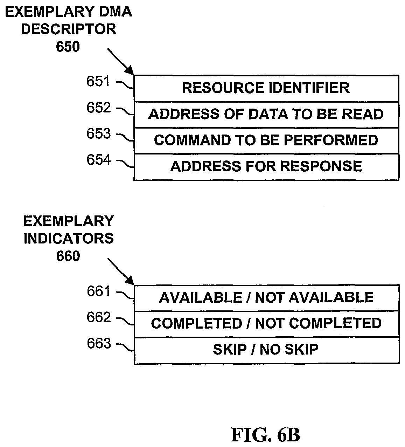

FIG. 6B illustrates an exemplary DMA descriptor 650 and exemplary indicators 660. In one embodiment, DMA descriptor includes, possibly with other fields, a resource identifier field 651, an address of the data to be read field 652, a command to be performed by the resource or other component field 653, and an address to place the returned response field 654. In one embodiment, indicators 660 used by a packet processing engine include an available/not available indicator 661, a completed/not completed indicator 662, and a skip/no skip indicator 663.

FIGs. 7A-B illustrate processes used by a resource in one embodiment. Turning to FIG. 7A, processing begins at process block 700, and proceeds to process block 702, wherein a DMA request is received. In process block 704, the DMA request is buffered. Processing then returns to process block 702. Turning to FIG. 7B, processing begins at process block 710, and proceeds to process block 712. If a DMA request is buffered, then in process block 714 one of the DMA requests is selected and retrieved. Next, in process block 716, the operation corresponding to the DMA request is performed. In process block 718, the result is returned, and processing returns to process block 712.

In view of the many possible embodiments to which the principles of our invention may be applied, it will be appreciated that the embodiments and aspects thereof described herein with respect to the drawings/figures are only illustrative and should not be taken as limiting the scope of the invention. For example and as would be apparent to one skilled in the art, many of the process block operations can be re-ordered to be performed before, after, or substantially concurrent with other operations. Also, many different forms of data structures could be used in various embodiments. The invention as described herein contemplates all such embodiments as may come within the scope of the following claims and equivalents thereof.

## Claims

1. A method for processing packets, the method comprising the steps of:
receiving a packet of a plurality of streams of packets (211);
storing a first subset of bytes of the received packet in a global packet buffer (239);
determining a next packet processor engine (225) of a plurality of packet processors based on a distribution pattern;
distributing a second subset of bytes of the packet to the next available packet processor engine (225) ;
processing the second subset to generate a modified subset;
gathering the modified subset from the next packet processor engine (225) in turn based on the distribution pattern;
assembling a modified packet based on the first subset of bytes from the global packet buffer (239) and the modified subset; and
forwarding the modified packet including the first subset and modified subset.

2. The method of claim 1, wherein said gathering includes determining whether or not said processing the subset of the packet is complete.

3. The method of claim 1 or 2, wherein said determining includes inspecting an indication whether or not said processing the subset of the packet is complete.

4. The method of any preceding claim, further comprising:
processing, after said gathering the modified subset, the subset or modified subset to generate a second modified subset;
gathering the second modified subset from the next packet processor in turn based on the distribution pattern; and
forwarding a second modified packet including the second modified subset.

5. The method of claim 4, wherein the packet is a multicast packet.

6. The method of claim 4 or 5, wherein a set of fragmented packets of the packet include the modified packet and the second modified packet.

7. The method of any of claims 4 to 6, wherein the packet includes a set of data fields; and each of the modified packet and the second modified packet include the set of data fields.

8. The method of any of claims 2 to 7, wherein in response to said determining said processing is not complete, skipping the packet processor in a current gathering round based on the distribution pattern.

9. The method of claim 1, wherein the packet buffer is a global packet memory (239) shared by each of the plurality of packet processors.

10. A method for processing packets according to claim 1, wherein the next packet processor of a plurality of packet processors is further determined based on the current availability of one or more of the plurality of packet processors.

11. The method of claim 3, wherein the indication comprises a skip or gather indication of said at least one packet processor.

12. The method of claim 11, wherein for each of the plurality of packet processors receiving the subset of bytes of one of the packets of a particular one of the plurality of ordered streams requiring at least one skip operation, generating a same number of skip or gather indications indicating a skip operation to maintain an original ordering of the plurality of packets of the particular one of the plurality of ordered streams.

13. A method according to any preceding claim, the method comprising:
building a descriptor (650) based on the received packet;
generating a direct memory access, DMA, request corresponding to the descriptor to a networked resource (235);
receiving a result from the networked resource, the result based on the descriptor; and
modifying the packet based on the result.

14. A method according to any preceding claim, wherein the received packet (430) includes a first portion (431) and a second portion (432), wherein the first and second portions include a common portion of at least one overlapping byte of the received packet; the method comprising:
storing the first portion including the first subset of bytes in the packet buffer (239); and
storing the second portion including the second subset of bytes in a local memory of the next packet processor (225).

15. The method of claim 14, comprising:
building a descriptor (650); and
retrieving at least one field of the first portion from the packet buffer, said retrieving including generating a direct memory access, DMA, request corresponding to the descriptor, and receiving said at least one field from the packet buffer based on the DMA request; and
wherein said modifying the second portion is based on said at least one field.

16. An apparatus (200) for processing packets, the apparatus comprising:
means for receiving a packet of a plurality of streams of packets (211);
means for storing a first subset of bytes of the received packet in a global packet buffer (239);
means for determining a next packet processor engine (225) of a plurality of packet processors engines based on a distribution pattern;
means for distributing a second subset of bytes of the packet to the next available packet processor engine (225) ;
means for processing the second subset to generate a modified subset;
means for gathering the modified subset from the next packet processor in turn based on the distribution pattern;
means for assembling a modified packet based on the first subset of bytes from the global packet buffer (239) and the modified subset; and
means for forwarding the modified packet including the first subset and the modified subset.

17. The apparatus of claim 16, wherein said means for gathering includes means for determining whether or not said processing the subset of the packet is complete.

18. The apparatus of claim 16 or 17, wherein said means for determining includes means for inspecting an indication whether or not said processing the subset of the packet is complete.

19. The apparatus of any of claims 16 to 18, further comprising:
means for processing the subset or modified subset to generate a second modified subset;
means for gathering the second modified subset from the next packet processor in turn based on the distribution pattern; and
means for forwarding a second modified packet including the second modified subset.

20. The apparatus of any of claims 16 to 19, wherein the packet is a multicast packet.

21. The apparatus of claim 19 or 20, wherein a set of fragmented packets of the packet include the modified packet and the second modified packet.

22. The apparatus of any of claims 17 to 21, comprising means for skipping the packet processor in a current gathering round based on the distribution pattern when said means for determining whether or not said processing the subset of the packet is complete identifies processing as not complete.

23. An apparatus according to claim 16 wherein the next packet processor is further determined based on the current availability of one or more of the plurality of packet processors.

24. The apparatus of any of claims 16 to 23, wherein the plurality of packet processors are grouped into a plurality of clusters (315).

25. The apparatus of claim 24, wherein each particular cluster of the plurality of clusters further includes a common cluster instruction memory (370) coupled to each of the packet processors (365) within said particular cluster.

26. The apparatus of claim 24 or 25, wherein each particular cluster of the plurality of clusters further includes a cluster multiplexer (371), coupled to each of the packet processors within said particular cluster, for interfacing with a resource network (320) coupled to the packet processors.

27. The apparatus of any of claims 16 to 26, wherein each packet processor of the plurality of packet processing engines includes an instruction cache (381), a processor (382), a data memory (383), and a direct memory access, DMA, device (384) for communicating with a plurality of resources (235) over a resource network (230).

28. The apparatus of claim 27, wherein the plurality of resources includes the packet buffer.

29. The apparatus of claim 28, wherein the packet buffer is accessible via the resource network and a second input.

30. The apparatus of any of claims 27 to 29, wherein the plurality of resources includes at least one of the group consisting of a routing unit, a policer, a traffic engineer, a statistics collector, and an authorization unit.

31. An apparatus according to any of claims 16 to 30, the apparatus comprising:
means for building a descriptor (650) based on the received packet;
means for generating a direct memory access, DMA, request corresponding to the descriptor to a networked resource (235);
means for receiving a result from the networked resource, the result based on the descriptor; and
means for modifying the packet based on the result.

32. A computer program product comprising instructions which, when executed by a computer, cause the computer to perform the method of any of claims 1 to 15.

## Patentansprüche

1. Paketverarbeitungsverfahren, wobei das Verfahren die folgenden Schritte aufweist:
Empfangen eines Pakets von mehreren Paketströmen (211);
Speichern einer ersten Teilmenge von Bytes des empfangenen Pakets in einem globalen Paketpuffer (239);
Bestimmen einer nächsten Paketprozessormaschine (225) mehrerer Paketprozessoren auf Basis eines Verteilungsmusters;
Verteilen einer zweiten Teilmenge von Bytes des Pakets an die nächste verfügbare Paketprozessormaschine (225);
Verarbeiten der zweiten Teilmenge zum Erzeugen einer modifizierten Teilmenge;
Erfassen der modifizierten Teilmenge von der auf Basis des Verteilungsmusters der Reihe nach nächsten Paketprozessormaschine (225);
Zusammenstellen eines modifizierten Pakets auf Basis der ersten Teilmenge von Bytes aus dem globalen Paketpuffer (239) und der modifizierten Teilmenge; und
Weiterleiten des modifizierten Pakets, das die Teilmenge und die modifizierte Teilmenge beinhaltet.

2. Verfahren nach Anspruch 1, wobei das genannte Erfassen das Bestimmen beinhaltet, ob das genannte Verarbeiten der Teilmenge des Pakets abgeschlossen ist oder nicht.

3. Verfahren nach Anspruch 1 oder 2, wobei das genannte Bestimmen das Prüfen eines Hinweises darauf beinhaltet, ob das genannte Verarbeiten der Teilmenge des Pakets abgeschlossen ist oder nicht.

4. Verfahren nach einem der vorhergehenden Ansprüche, das ferner Folgendes aufweist:
Verarbeiten, nach dem genannten Erfassen der modifizierten Teilmenge, der Teilmenge oder der modifizierten Teilmenge zum Erzeugen einer zweiten modifizierten Teilmenge;
Erfassen der zweiten modifizierten Teilmenge aus dem auf Basis des Verteilungsmusters der Reihe nach nächsten Paketprozessor und
Weiterleiten eines zweiten modifizierten Pakets, das die zweite modifizierte Teilmenge beinhaltet.

5. Verfahren nach Anspruch 4, wobei das Paket ein Multicasting-Paket ist.

6. Verfahren nach Anspruch 4 oder 5, wobei ein Satz fragmentierter Pakete des Pakets das modifizierte Paket und das zweite modifizierte Paket beinhaltet.

7. Verfahren nach einem der Ansprüche 4 bis 6, wobei das Paket einen Satz Datenfelder beinhaltet und das modifizierte Paket und das zweite modifizierte Paket jeweils den Satz Datenfelder beinhalten.

8. Verfahren nach einem der Ansprüche 2 bis 7, wobei als Reaktion auf das genannte Bestimmen, dass das genannte Verarbeiten nicht abgeschlossen ist, der Paketprozessor in einer aktuellen Erfassungsrunde auf Basis des Verteilungsmusters übersprungen wird.

9. Verfahren nach Anspruch 1, wobei der Paketpuffer ein globaler Paketspeicher (239) ist, der von jedem der mehreren Paketprozessoren gemeinsam genutzt wird.

10. Paketverarbeitungsverfahren nach Anspruch 1, wobei der nächste Paketprozessor von mehreren Paketprozessoren ferner auf Basis der aktuellen Verfügbarkeit von einem oder mehr der mehreren Paketprozessoren bestimmt wird.

11. Verfahren nach Anspruch 3, wobei der Hinweis einen Sprung- oder einen Erfassungshinweis des genannten wenigstens einen Paketprozessors aufweist.

12. Verfahren nach Anspruch 11, wobei für jeden der mehreren Paketprozessoren, die die Teilmenge von Bytes von einem der Pakete eines speziellen der mehreren geordneten Ströme empfangen, wenigstens eine Sprungoperation erfordert wird, eine gleiche Sprungoperationszahl erzeugt wird oder Hinweise erfasst werden, die eine Sprungoperation anzeigen, um eine ursprüngliche Ordnung der mehreren Pakete des jeweiligen der mehreren geordneten Ströme aufrecht zu erhalten.

13. Verfahren nach einem der vorhergehenden Ansprüche, wobei das Verfahren Folgendes aufweist:
Aufbauen eines Deskriptors (650) auf Basis des empfangenen Pakets;
Erzeugen einer dem Deskriptor entsprechenden Speicherdirektzugriffs- (DMA) -Anforderung an eine vernetzte Ressource (235);
Empfangen eines Ergebnisses von der vernetzten Ressource, wobei das Ergebnis auf dem Deskriptor basiert; und
Modifizieren des Pakets auf Basis des Ergebnisses.

14. Verfahren nach einem der vorhergehenden Ansprüche, wobei das empfangene Paket (430) einen ersten Teil (431) und einen zweiten Teil (432) beinhaltet, wobei der erste und der zweite Teil einen gemeinsamen Teil von wenigstens einem überlappenden Byte des empfangenen Pakets beinhalten; wobei das Verfahren Folgendes aufweist:
Speichern des ersten Teils, der die erste Teilmenge von Bytes in dem Paketpuffer (239) beinhaltet; und
Speichern des zweiten Teils, der die zweite Teilmenge von Bytes in einem lokalen Speicher des nächsten Paketprozessors (225) beinhaltet.

15. Verfahren nach Anspruch 14, das Folgendes aufweist:
Aufbauen eines Deskriptors (650) und
Abrufen von wenigstens einem Feld des ersten Teils aus dem Paketpuffer, wobei das genannte Abrufen das Erzeugen einer dem Deskriptor entsprechenden Speicherdirektzugriff-(DMA) -Anforderung beinhaltet, und Empfangen des genannten wenigstens einen Felds aus dem Paketpuffer auf Basis der DMA-Anforderung; und
wobei das genannte Modifizieren des zweiten Teils auf dem genannten wenigstens einen Feld basiert.

16. Paketverarbeitungsvorrichtung (200), wobei die Vorrichtung Folgendes aufweist:
ein Mittel zum Empfangen eines Pakets von mehreren Paketströmen (211);
ein Mittel zum Speichern einer ersten Teilmenge von Bytes des empfangenen Pakets in einem globalen Paketpuffer (239) ;
ein Mittel zum Bestimmen einer nächsten Paketprozessormaschine (225) mehrerer Paketprozessormaschinen auf Basis eines Verteilungsmusters;
ein Mittel zum Verteilen einer zweiten Teilmenge von Bytes des Pakets an die nächste verfügbare Paketprozessormaschine (225);
ein Mittel zum Verarbeiten der zweiten Teilmenge zum Erzeugen einer modifizierten Teilmenge;
ein Mittel zum Erfassen der modifizierten Teilmenge von dem auf Basis des Verteilungsmusters der Reihe nach nächsten Prozessor;
ein Mittel zum Zusammenstellen eines modifizierten Pakets auf Basis der ersten Teilmenge von Bytes aus dem globalen Paketpuffer (239) und der modifizierten Teilmenge und
ein Mittel zum Weiterleiten des modifizierten Pakets, das die Teilmenge und die modifizierte Teilmenge beinhaltet.

17. Vorrichtung nach Anspruch 16, wobei das genannte Mittel zum Erfassen ein Mittel zum Bestimmen beinhaltet, ob das genannte Verarbeiten der Teilmenge des Pakets abgeschlossen ist oder nicht.

18. Vorrichtung nach Anspruch 16 oder 17, wobei das genannte Mittel zum Bestimmen ein Mittel zum Prüfen eines Hinweises darauf beinhaltet, ob das genannte Verarbeiten der Teilmenge des Pakets abgeschlossen ist oder nicht.

19. Vorrichtung nach einem der Ansprüche 16 bis 18, die ferner Folgendes aufweist:
ein Mittel zum Verarbeiten der Teilmenge oder der modifizierten Teilmenge zum Erzeugen einer zweiten modifizierten Teilmenge;
ein Mittel zum Erfassen der zweiten modifizierten Teilmenge aus dem auf Basis des Verteilungsmusters der Reihe nach nächsten Paketprozessor und
ein Mittel zum Weiterleiten eines zweiten modifizierten Pakets, das die zweite modifizierte Teilmenge beinhaltet.

20. Vorrichtung nach einem der Ansprüche 16 bis 19, wobei das Paket ein Multicasting-Paket ist.

21. Vorrichtung nach Anspruch 19 oder 20, wobei ein Satz fragmentierter Pakete des Pakets das modifizierte Paket und das zweite modifizierte Paket beinhaltet.

22. Vorrichtung nach einem der Ansprüche 17 bis 21, das ein Mittel zum Überspringen des Paketprozessors in einer aktuellen Erfassungsrunde auf Basis des Verteilungsmusters aufweist, wenn das genannte Mittel zum Bestimmen, ob die genannte Verarbeitung der Teilmenge des Pakets abgeschlossen ist oder nicht, feststellt, dass die Verarbeitung nicht abgeschlossen ist.

23. Vorrichtung nach Anspruch 16, wobei der nächste Paketprozessor ferner auf Basis der aktuellen Verfügbarkeit von einem oder mehr der mehreren Paketprozessoren bestimmt wird.

24. Vorrichtung nach einem der Ansprüche 16 bis 23, wobei die mehreren Paketprozessoren zu mehreren Clustern (315) gruppiert sind.

25. Vorrichtung nach Anspruch 24, wobei jedes jeweilige Cluster der mehreren Cluster ferner einen gemeinsamen Clusteranweisungsspeicher (370) beinhaltet, der mit jedem der Paketprozessoren (365) in dem genannten jeweiligen Cluster gekoppelt ist.

26. Vorrichtung nach Anspruch 24 oder 25, wobei jedes jeweilige Cluster der mehreren Cluster ferner einen Cluster-Multiplexer (371) beinhaltet, der mit jedem der Paketprozessoren in dem genannten jeweiligen Cluster gekoppelt ist, zum Anschließen an ein Ressourcennetzwerk (320), das mit den Paketprozessoren gekoppelt ist.

27. Vorrichtung nach einem der Ansprüche 16 bis 26, wobei jeder Paketprozessor der mehreren Paketverarbeitungsmaschinen einen Anweisungscache (381), einen Prozessor (382), einen Datenspeicher (383) und eine Speicherdirektzugriff- (DMA) -Vorrichtung (384) zur Kommunikation mit mehreren Ressourcen (235) über ein Ressourcennetzwerk (230) beinhaltet.

28. Vorrichtung nach Anspruch 27, wobei die mehreren Ressourcen den Paketpuffer beinhalten.

29. Vorrichtung nach Anspruch 28, wobei der Paketpuffer über das Ressourcennetzwerk und einen zweiten Eingang zugänglich ist.

30. Vorrichtung nach einem der Ansprüche 27 bis 29, wobei die mehreren Ressourcen wenigstens eine(n) aus der Gruppe bestehend aus einer Routingeinheit, einem Policer, einem Verkehrstechniker, einem Statistikerfasser und einer Berechtigungseinheit beinhaltet.

31. Vorrichtung nach einem der Ansprüche 16 bis 30, wobei die Vorrichtung Folgendes aufweist:
ein Mittel zum Aufbauen eines Deskriptors (650) auf Basis des empfangenen Pakets;
ein Mittel zum Erzeugen einer dem Deskriptor entsprechenden Speicherdirektzugriffs- (DMA) -Anforderung an eine vernetzte Ressource (235);
ein Mittel zum Empfangen eines Ergebnisses von der vernetzten Ressource, wobei das Ergebnis auf dem Deskriptor basiert; und
ein Mittel zum Modifizieren des Pakets auf Basis des Ergebnisses.

32. Computerprogrammprodukt, das Anweisungen aufweist, die bei Ausführung durch einen Computer den Computer zum Durchführen eines Verfahrens nach einem der Ansprüche 1 bis 15 veranlasst.

## Revendications

1. Procédé de traitement de paquets, le procédé comprenant les étapes consistant à :
recevoir un paquet d'une pluralité de flux de paquets (211) ;
stocker un premier sous-ensemble d'octets du paquet reçu dans une mémoire tampon globale de paquets (239) ;
déterminer un moteur de traitement de paquet (225) suivant d'une pluralité de processeurs de paquet sur la base d'un schéma de distribution ;
distribuer un second sous-ensemble d'octets du paquet au moteur de traitement de paquet (225) suivant disponible ;
traiter le second sous-ensemble afin de générer un sous-ensemble modifié ;
collecter le sous-ensemble modifié à partir du moteur de traitement de paquet (225) suivant à tour de rôle sur la base du schéma de distribution ;
assembler un paquet modifié sur la base du premier sous-ensemble d'octets à partir de la mémoire tampon globale de paquets (239) et du sous-ensemble modifié ; et
transférer le paquet modifié comprenant le premier sous-ensemble et le sous-ensemble modifié.

2. Procédé selon la revendication 1, dans lequel ladite collecte consiste à déterminer si ledit traitement du sous-ensemble du paquet est terminé ou non.

3. Procédé selon la revendication 1 ou 2, dans lequel ladite détermination consiste à inspecter une indication de si ledit traitement du sous-ensemble du paquet est terminé ou non.

4. Procédé selon l'une quelconque des revendications précédentes, consistant en outre à :
traiter, après ladite collecte du sous-ensemble modifié, le sous-ensemble ou sous-ensemble modifié afin de générer un second sous-ensemble modifié ;
collecter le second sous-ensemble modifié à partir du processeur de paquet suivant à tour de rôle sur la base du schéma de distribution ; et
transférer un second paquet modifié comprenant le second sous-ensemble modifié.

5. Procédé selon la revendication 4, dans lequel le paquet est un paquet de multidiffusion.

6. Procédé selon la revendication 4 ou 5, dans lequel un ensemble de paquets fragmentés du paquet comprend le paquet modifié et le second paquet modifié.

7. Procédé selon l'une quelconque des revendications 4 à 6, dans lequel le paquet comprend un ensemble de champs de données ; et le paquet modifié et le second paquet modifié comprennent chacun l'ensemble de champs de données.

8. Procédé selon l'une quelconque des revendications 2 à 7, consistant en outre, en réponse à ladite détermination que ledit traitement n'est pas terminé, à omettre le processeur de paquet dans un tour de collecte en cours sur la base du schéma de distribution.

9. Procédé selon la revendication 1, dans lequel la mémoire tampon de paquets est une mémoire globale de paquets (239) partagée par chaque processeur de la pluralité de processeurs de paquet.

10. Procédé de traitement de paquets selon la revendication 1, dans lequel le processeur de paquet suivant d'une pluralité de processeurs de paquet est en outre déterminé sur la base de la disponibilité en cours d'un ou plusieurs processeurs de la pluralité de processeurs de paquet.

11. Procédé selon la revendication 3, dans lequel l'indication comprend une indication d'omission ou de collecte dudit au moins un processeur de paquet.

12. Procédé selon la revendication 11, consistant en outre, pour chaque processeur de la pluralité de processeurs de paquet recevant le sous-ensemble d'octets d'un des paquets d'un flux ordonné particulier de la pluralité de flux ordonnés exigeant au moins une opération d'omission, à générer un même nombre d'indications d'omission ou de collecte indiquant une opération d'omission afin de maintenir un ordre original de la pluralité de paquets du flux ordonné particulier de la pluralité de flux ordonnés.

13. Procédé selon l'une quelconque des revendications précédentes, le procédé consistant à :
produire un descripteur (650) sur la base du paquet reçu ;
générer une demande d'accès direct à une mémoire (DMA) correspondant au descripteur pour une ressource en réseau (235) ;
recevoir un résultat en provenance de la ressource en réseau, le résultat étant basé sur le descripteur ; et
modifier le paquet sur la base du résultat.

14. Procédé selon l'une quelconque des revendications précédentes, dans lequel le paquet reçu (430) comprend une première partie (431) et une seconde partie (432), les première et seconde parties comprenant une partie commune d'au moins un octet de chevauchement du paquet reçu ; le procédé consistant à :
stocker la première partie comprenant le premier sous-ensemble d'octets dans la mémoire tampon de paquets (239) ; et
stocker la seconde partie comprenant le second sous-ensemble d'octets dans une mémoire locale du processeur de paquet (225) suivant.

15. Procédé selon la revendication 14, consistant à :
produire un descripteur (650) ; et
récupérer au moins un champ de la première partie dans la mémoire tampon de paquets, ladite récupération consistant à générer une demande d'accès direct à une mémoire (DMA) correspondant au descripteur, et recevoir ledit au moins un champ en provenance de la mémoire tampon de paquets sur la base de la demande DMA ; et
ladite modification de la seconde partie étant basée sur ledit au moins un champ.

16. Appareil (200) de traitement de paquets, l'appareil comprenant :
un moyen permettant de recevoir un paquet d'une pluralité de flux de paquets (211) ;
un moyen permettant de stocker un premier sous-ensemble d'octets du paquet reçu dans une mémoire tampon globale de paquets (239) ;
un moyen permettant de déterminer un moteur de traitement de paquet (225) suivant d'une pluralité de moteurs de traitement de paquet sur la base d'un schéma de distribution ;
un moyen permettant de distribuer un second sous-ensemble d'octets du paquet au moteur de traitement de paquet (225) suivant disponible ;
un moyen permettant de traiter le second sous-ensemble afin de générer un sous-ensemble modifié ;
un moyen permettant de collecter le sous-ensemble modifié à partir du processeur de paquet suivant à tour de rôle sur la base du schéma de distribution ;
un moyen permettant d'assembler un paquet modifié sur la base du premier sous-ensemble d'octets à partir de la mémoire tampon globale de paquets (239) et du sous-ensemble modifié ; et
un moyen permettant de transférer le paquet modifié comprenant le premier sous-ensemble et le sous-ensemble modifié.

17. Appareil selon la revendication 16, dans lequel ledit moyen de collecte comprend un moyen permettant de déterminer si ledit traitement du sous-ensemble du paquet est terminé ou non.

18. Appareil selon la revendication 16 ou 17, dans lequel ledit moyen de détermination comprend un moyen permettant d'inspecter une indication de si ledit traitement du sous-ensemble du paquet est terminé ou non.

19. Appareil selon l'une quelconque des revendications 16 à 18, comprenant en outre :
un moyen permettant de traiter le sous-ensemble ou le sous-ensemble modifié afin de générer un second sous-ensemble modifié ;
un moyen permettant de collecter le second sous-ensemble modifié à partir du processeur de paquet suivant à tour de rôle sur la base du schéma de distribution ; et
un moyen permettant de transférer un second paquet modifié comprenant le second sous-ensemble modifié.

20. Appareil selon l'une quelconque des revendications 16 à 19, dans lequel le paquet est un paquet de multidiffusion.

21. Appareil selon la revendication 19 ou 20, dans lequel un ensemble de paquets fragmentés du paquet comprend le paquet modifié et le second paquet modifié.

22. Appareil selon l'une quelconque des revendications 17 à 21, comprenant un moyen permettant d'omettre le processeur de paquet dans un tour de collecte en cours sur la base du schéma de distribution quand ledit moyen de détermination de si ledit traitement du sous-ensemble du paquet est terminé ou non identifie que le traitement n'est pas terminé.

23. Appareil selon la revendication 16, dans lequel le processeur de paquet suivant est en outre déterminé sur la base de la disponibilité en cours d'un ou plusieurs processeurs de la pluralité de processeurs de paquet.

24. Appareil selon l'une quelconque des revendications 16 à 23, dans lequel les multiples processeurs de paquet sont regroupés en une pluralité de grappes (315).

25. Appareil selon la revendication 24, dans lequel chaque grappe particulière de la pluralité de grappes comprend en outre une mémoire commune d'instructions de grappe (370) couplée à chacun des processeurs de paquet (365) de ladite grappe particulière.

26. Appareil selon la revendication 24 ou 25, dans lequel chaque grappe particulière de la pluralité de grappes comprend en outre un multiplexeur de grappe (371), couplé à chacun des processeurs de paquet de ladite grappe particulière, en vue de s'interfacer avec un réseau de ressources (320) couplé aux processeurs de paquets.

27. Appareil selon l'une quelconque des revendications 16 à 26, dans lequel chaque processeur de paquet de la pluralité de moteurs de traitement de paquet comprend une mémoire cache d'instructions (381), un processeur (382), une mémoire de données (383) et un dispositif d'accès direct à une mémoire (DMA) (384) pour communiquer avec une pluralité de ressources (235) sur un réseau de ressources (230).

28. Appareil selon la revendication 27, dans lequel la pluralité de ressources comprend la mémoire tampon de paquets.

29. Appareil selon la revendication 28, dans lequel la mémoire tampon de paquets est accessible par l'intermédiaire du réseau de ressources et d'une seconde entrée.

30. Appareil selon l'une quelconque des revendications 27 à 29, dans lequel la pluralité de ressources comprend au moins un élément choisi dans le groupe constitué d'une unité de routage, d'un limiteur de flux, d'un ingénieur de trafic, d'un collecteur de statistiques et d'une unité d'autorisation.

31. Appareil selon l'une quelconque des revendications 16 à 30, l'appareil comprenant :
un moyen permettant de produire un descripteur (650) sur la base du paquet reçu ;
un moyen permettant de générer une demande d'accès direct à une mémoire (DMA) correspondant au descripteur pour une ressource en réseau (235) ;
un moyen permettant de recevoir un résultat en provenance de la ressource en réseau, le résultat étant basé sur le descripteur ; et
un moyen permettant de modifier le paquet sur la base du résultat.

32. Produit de programme informatique comprenant des instructions qui, lorsqu'elles sont exécutées par un ordinateur, amènent l'ordinateur à réaliser le procédé selon l'une quelconque des revendications 1 à 15.
